# EUROPEAN PATENT APPLICATION

(11) **EP 4 631 670 A1**
(43) Date of publication of application: **15.10.2025**
(21) Application number: 23922849.7
(22) Date of filing: 12.10.2023
(51) Int. Cl.: B23P 25/00, C21D 7/02

(54) **METHOD OF MANUFACTURING METAL SHEET STRUCTURE**

(30) Priority: 15.02.2023 JP 2023021297
(71) Applicant: JFE Steel Corporation, Tokyo 100-0011 (JP)
(72) Inventor: YAMAGUCHI, Naoki, Tokyo 100-0011 (JP)
(74) Representative: Haseltine Lake Kempner LLP
(86) International application number: PCT/JP2023/037031
(87) International publication number: WO 2024/171515

(57) **Abstract**

A metal sheet structure manufacturing method according to the present invention manufactures a structure using a metal sheet by improving fatigue strength of a portion of the structure where fatigue fracture is concerned and includes: a fatigue fracture risk portion specifying step S1 of specifying a sheared edge of the metal sheet where stress concentration occurs during use of the structure and fatigue fracture is concerned as a fatigue fracture risk portion; and a compressive residual stress application step S3 of applying a load to the metal sheet or the structure so that tensile plastic strain is concentrated on the fatigue fracture risk portion, and applying a compressive residual stress to the fatigue fracture risk portion by generating tensile plastic strain in the fatigue fracture risk portion and then unloading the load.

## Description

### Field

The present invention relates to a metal sheet structure manufacturing method of manufacturing a structure using a metal sheet by improving fatigue strength of a portion of the structure where fatigue fracture is concerned.

### Background

In a structure of a metal sheet typified by an automobile component or the like, the fatigue strength of a sheared edge of the metal sheet is often a problem. In particular, in electric automobiles, since the weight of the battery is added, the vehicle weight is larger than that of the gasoline vehicle, and the fatigue strength required for the automobile component is also increased. Therefore, in a structure using a metal sheet such as an automobile component, some techniques capable of increasing the fatigue strength of a sheared edge of the metal sheet have been proposed so far.

For example, Patent Literature 1 discloses a method for improving fatigue strength in a machine component made of a steel material and having a notch portion by applying compressive residual stress by striking a surface (corresponding to a sheared edge) of the notch portion with an ultrasonic vibrator. In addition, Patent Literature 2 discloses a method in which a circular blanking hole is formed in a metal sheet using a punch, and then the punch is rotated in a circumferential direction in a state of being inserted into the blanking hole to polish a sheared edge of the blanking hole, thereby improving fatigue strength of the sheared edge.

### Citation List

### Patent Literature

Patent Literature 1: JP 2006-104551 A
Patent Literature 2: JP 2022-42631 A

### Summary

### Technical Problem

In the method disclosed in Patent Literature 1, there are problems such as an increase in device cost of an ultrasonic vibrator that strikes the sheared edge of the notch portion, and difficulty in accurately striking the sheared edges of the plurality of notch portions. In addition, the method disclosed in Patent Literature 2 can reliably improve the fatigue strength since the sheared edge is polished after the circular blanking hole is formed, but since a special die is used, the device cost is increased.

The present invention has been made to solve the above problems, and an object thereof is to provide a metal sheet structure manufacturing method capable of reliably improving the fatigue strength of the sheared edge of the metal sheet without requiring a large device cost. Solution to Problem

A metal sheet structure manufacturing method according to the present invention manufactures a structure using a metal sheet by improving fatigue strength of a portion of the structure where fatigue fracture is concerned, and includes: a specifying step of specifying a portion of a sheared edge of the metal sheet where stress concentration occurs during use of the structure and fatigue fracture is concerned as a fatigue fracture risk portion; and an application step of applying a load to the metal sheet or the structure such that tensile plastic strain is concentrated on the specified fatigue fracture risk portion, and applying a compressive residual stress to the fatigue fracture risk portion by generating tensile plastic strain in the fatigue fracture risk portion and then unloading the load.

The specifying step may include a first specifying step of specifying a fatigue strength of the metal sheet, a stress analysis step of performing stress analysis for calculating stress of the sheared edge of the metal sheet during use of the structure, and a second specifying step of specifying a portion exceeding the fatigue strength specified in the first specifying step within the sheared edge of the metal sheet in the structure for which the stress has been calculated as a fatigue fracture risk portion where fatigue fracture is concerned.

In a case where a notch portion is provided at an end portion of the metal sheet in a flat portion of the structure, and the fatigue fracture risk portion specified in the specifying step is a sheared edge of the notch portion, the application step may generate tensile plastic strain in the fatigue fracture risk portion by one of or a combination of applying a tensile load in a direction parallel to a tangent of the fatigue fracture risk portion in the notch portion, applying a load that causes the fatigue fracture risk portion to undergo bending deformation to be bending outside in a plane of the metal sheet, or applying a load that causes a portion including the fatigue fracture risk portion to undergo bending deformation in an out-of-plane direction along an edge of the notch portion.

In a case where a hole portion having a circular shape or an elliptical shape is provided in the metal sheet in a flat portion of the structure, and the fatigue fracture risk portion specified in the specifying step is a sheared edge of the hole portion, the application step may generate the tensile plastic strain in the fatigue fracture risk portion by one of or a combination of applying a tensile load in a direction parallel to a tangent of the fatigue fracture risk portion in the hole portion or applying a load that causes a portion including the fatigue fracture risk portion to undergo bending deformation in an out-of-plane direction along an edge of the hole portion.

The application step may generate the tensile plastic strain in the fatigue fracture risk portion by forming a plurality of beads so as to sandwich the fatigue fracture risk portion in a direction parallel to a tangent of the fatigue fracture risk portion.

The application step may generate the tensile plastic strain in the fatigue fracture risk portion such that an average gradient of the tensile plastic strain in a range from the fatigue fracture risk portion to 2t (mm) in a direction orthogonal to the tangent of the fatigue fracture risk portion with respect to a sheet thickness t (mm) of the metal sheet is 0.004/2t (mm⁻¹) or more.

The application step may generate the tensile plastic strain in the fatigue fracture risk portion such that an absolute value of a compressive residual stress applied to the fatigue fracture risk portion is 40% or more of a tensile strength of the metal sheet.

The application step may generate the tensile plastic strain in the fatigue fracture risk portion such that a thickness reduction ratio of the fatigue fracture risk portion is 10% or less.

The metal sheet may have a tensile strength of 780 MPa or more.

The metal sheet may have a strain hardening exponent of 0.2 or less in a plastic strain range of 4% or more and 6% or less.

### Advantageous Effects of Invention

In the present invention, a portion of a sheared edge of a metal sheet where stress concentrates during use of a structure using the metal sheet and fatigue fracture is concerned is specified as a fatigue fracture risk portion. Then, in the present invention, a load is applied to the specified fatigue fracture risk portion so that tensile plastic strain is concentrated, and after the tensile plastic strain is generated, the load is unloaded, thereby applying a compressive residual stress to the fatigue fracture risk portion. As a result, even when stress concentrates on the fatigue fracture risk portion during use of the structure using the metal sheet, it is possible to suppress the growth of cracks in the fatigue fracture risk portion, and thus it is possible to manufacture a structure having improved fatigue strength. In addition, according to the present invention, since the compressive residual stress is applied to the fatigue fracture risk portion, delayed fracture characteristics (delayed fracture properties) of the fatigue fracture risk portion in the structure can also be improved. Further, according to the present invention, since work hardening can be caused by generating tensile plastic strain in the fatigue fracture risk portion, the yield strength of the fatigue fracture risk portion is increased, so that the deformation strength when a single load is input to the structure can also be improved.

### Brief Description of Drawings

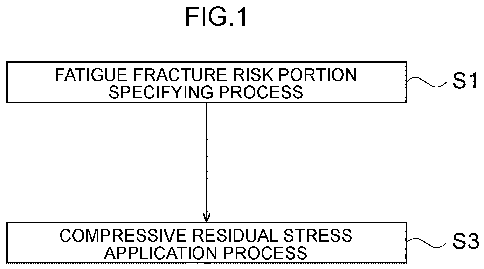

[FIG. 1] FIG. 1 is a flowchart illustrating a flow of specific processing of a metal sheet structure manufacturing method according to an embodiment of the present invention.

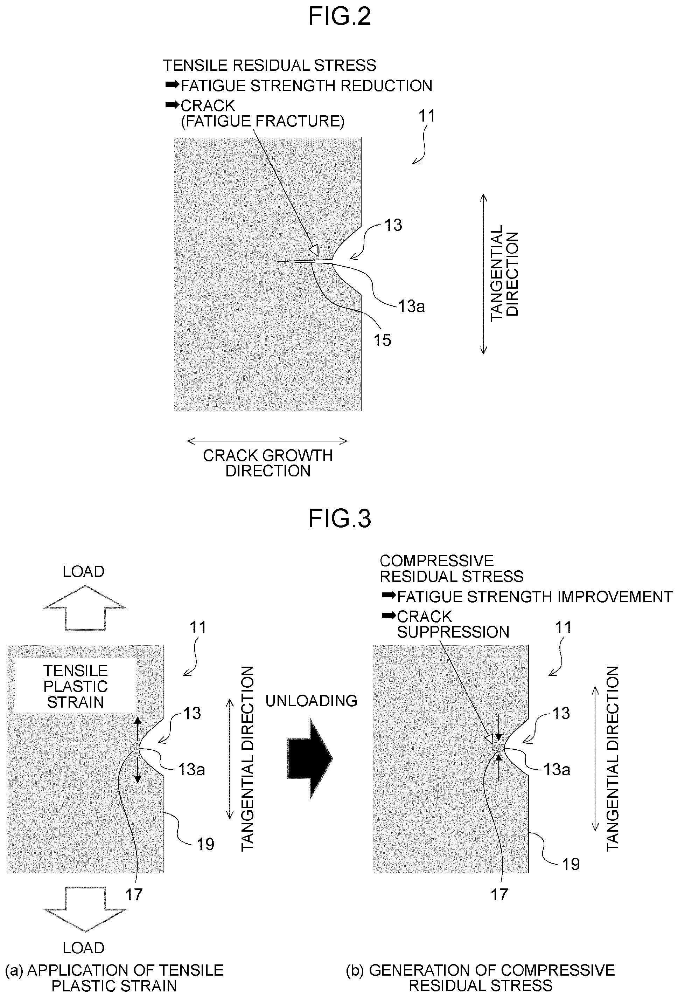

[FIG. 2] FIG. 2 is a diagram describing tensile residual stress generated in a metal sheet provided with a sheared notch portion, and occurrence of a crack and fatigue fracture due to the tensile residual stress.
[FIG. 3] FIG. 3 is a diagram describing the reason why the fatigue strength can be improved by generating tensile plastic strain so that the tensile plastic strain concentrates on a fatigue fracture risk portion in the method according to the present invention ((a) generation of tensile plastic strain in the notch portion, and (b) application of compressive residual stress by generation of tensile plastic strain in the notch portion followed by unloading).

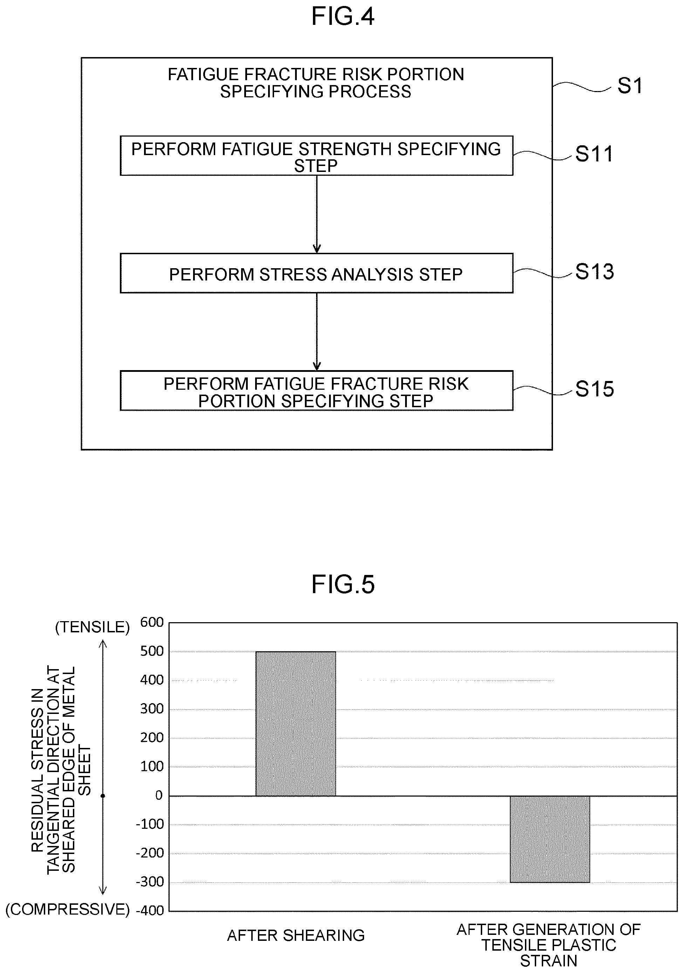

[FIG. 4] FIG. 4 is a flowchart describing specific processing of a step of specifying a fatigue fracture risk portion where there is a risk of occurrence of fatigue fracture in a structure using a metal sheet in the metal sheet structure manufacturing method according to the embodiment of the present invention.
[FIG. 5] FIG. 5 is a graph of a specific example in which tensile residual stress generated in a sheared notch portion and compressive residual stress applied by generation of tensile plastic strain in the notch portion followed by unloading are measured in the metal sheet structure manufacturing method according to the present embodiment.

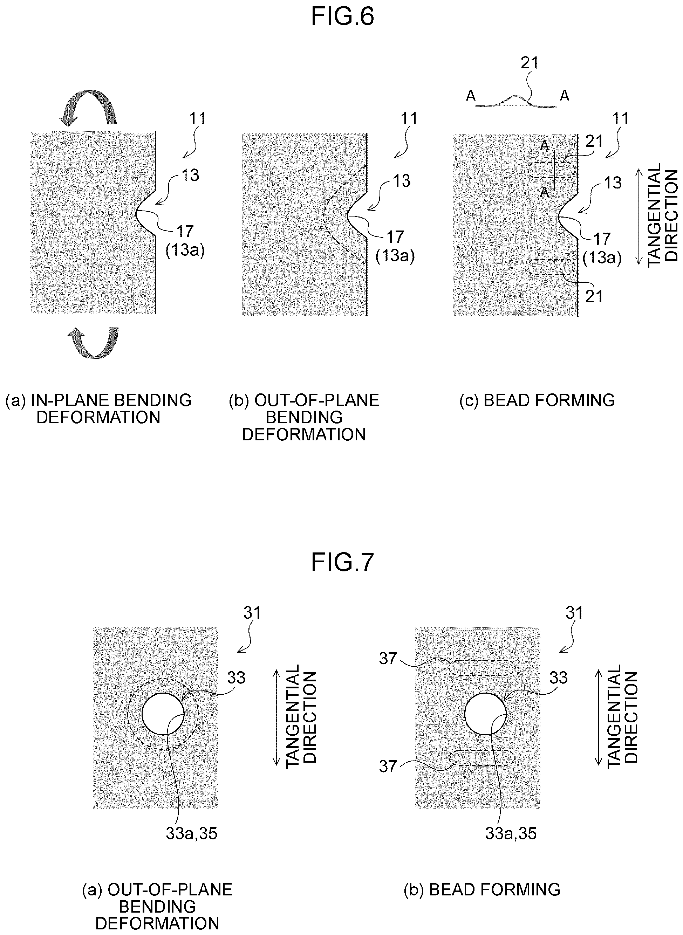

[FIG. 6] FIG. 6 is a diagram describing an aspect in which a load is applied such that tensile plastic strain concentrates on a sheared edge of a notch portion specified as a fatigue fracture risk portion in the metal sheet structure manufacturing method according to the present embodiment ((a) in-plane bending deformation, (b) out-of-plane bending deformation, (c) bead forming).
[FIG. 7] FIG. 7 is a diagram illustrating a specific example of an aspect in which a load is applied such that tensile plastic strain concentrates on a sheared edge of a circular hole portion specified as a fatigue fracture risk portion in a metal sheet manufacturing method according to the present embodiment ((a) out-of-plane bending deformation, (b) bead forming).

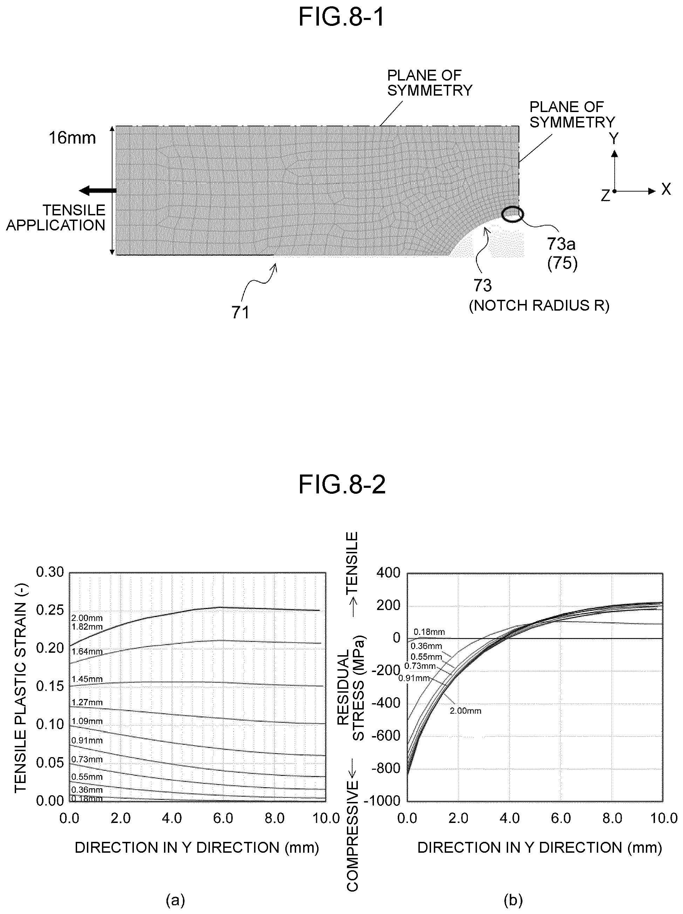

[FIG. 8-1] FIG. 8-1 is a diagram illustrating a test piece model (1/4 model) used in FEM analysis for obtaining a relationship between tensile plastic strain and residual compressive stress generated in a notch portion by applying a tensile load to the test piece provided with the notch portion in the present embodiment.
[FIG. 8-2] FIG. 8-2 is a diagram illustrating a result of FEM analysis in which displacement of tensile deformation is applied to a test piece model provided with a notch portion (blanking radius R = 10 mm) in the present embodiment, and (a) distribution of tensile plastic strain and (b) residual stress distribution in a direction orthogonal to a tangent of a sheared edge of a notch root that is a fatigue fracture risk portion.

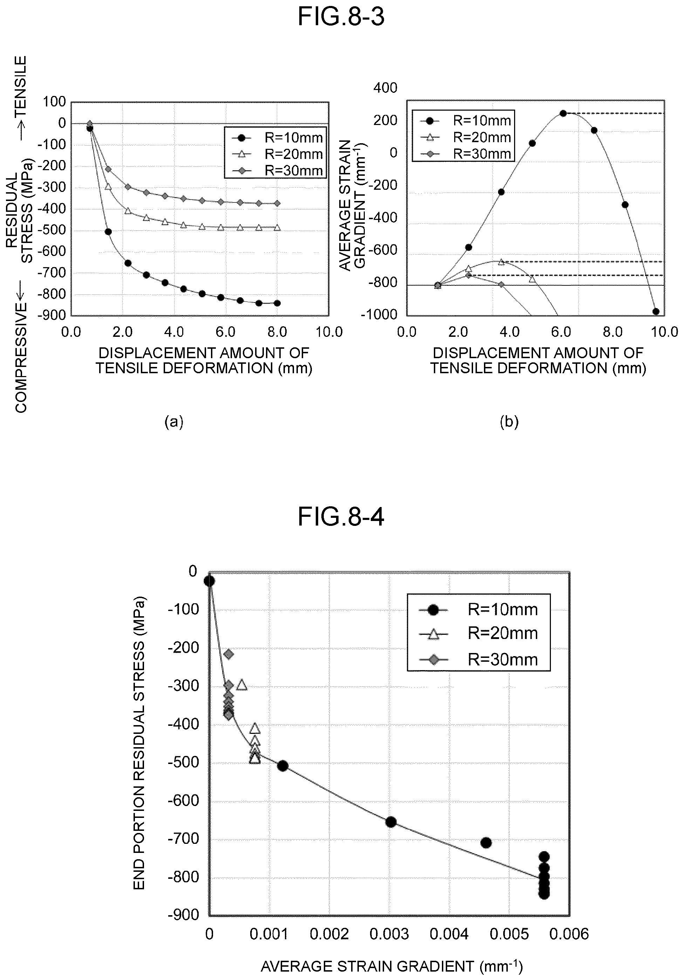

[FIG. 8-3] FIG. 8-3 is a diagram illustrating a result of FEM analysis in which displacement of tensile deformation is applied to a test piece model provided with a notch portion (blanking radius R = 10, 20, and 30 mm) in the present embodiment, and is a graph illustrating (a) a relationship between compressive residual stress and a displacement amount of tensile deformation at a notch root of the notch portion, and (b) a relationship between an average gradient of tensile plastic strain and a displacement amount of tensile deformation.
[FIG. 8-4] FIG. 8-4 is a diagram illustrating a result of FEM analysis in which displacement of tensile deformation is applied to a test piece model provided with a notch portion (blanking radius R = 10, 20, and 30 mm) in the present embodiment, and is a graph illustrating a relationship between compressive residual stress at the notch root and the maximum value of the average gradient of plastic strain in the step of tensile deformation.

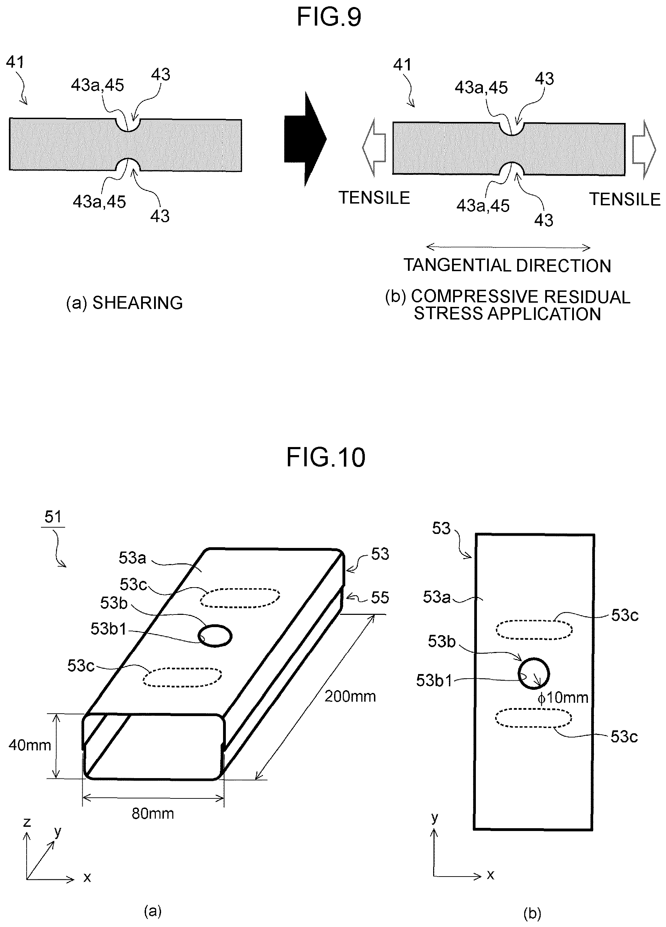

[FIG. 9] FIG. 9 is a diagram illustrating a test piece used in a fatigue test regarding improvement of fatigue strength of a metal sheet provided with a notch portion by shearing in a first example ((a) after shearing, (b) application of compressive residual stress).
[FIG. 10] FIG. 10 is a diagram illustrating a structure using a metal sheet provided with a circular hole portion by shearing in a second example (second inventive example).

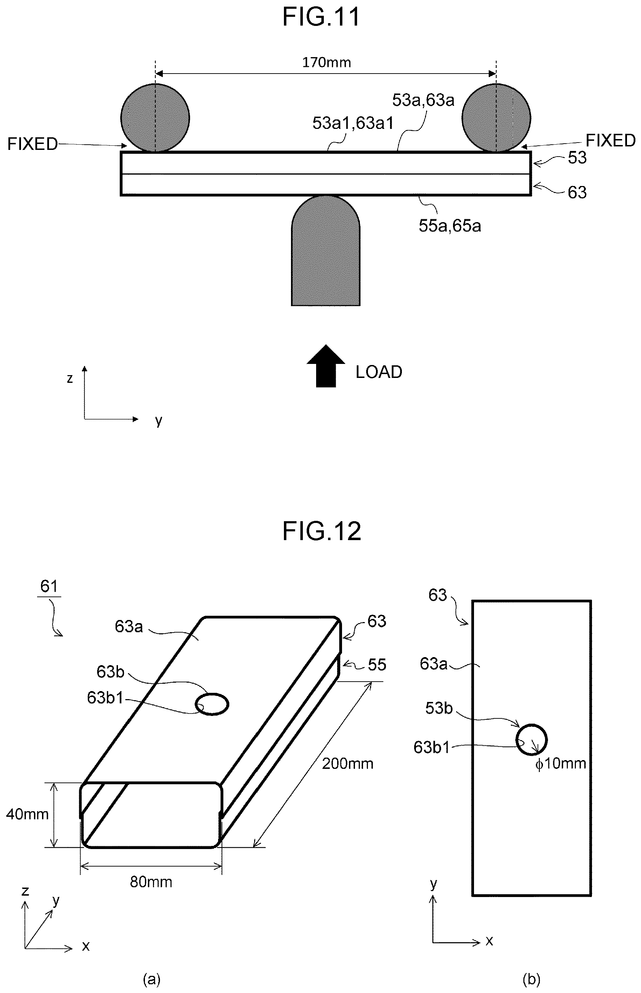

[FIG. 11] FIG. 11 is a diagram describing a fatigue test method of a structure using a metal sheet provided with a circular hole portion by shearing in the second example.
[FIG. 12] FIG. 12 is a diagram illustrating a structure using a metal sheet provided with a circular hole portion by shearing in the second example (second comparative example).

### Description of Embodiments

### <Circumstances leading to the present invention>

It is known that tensile residual stress is generated in a tangential direction in the plane of a metal sheet 11 at a sheared edge 13a of a notch root in a notch portion 13 formed by shearing an end portion of the metal sheet 11 as exemplified in FIG. 2, so that the fatigue strength is reduced. Therefore, when a load is applied during use of a structure using such a metal sheet 11 and stress concentrates on the notch root of the notch portion 13, there is a concern that a crack 15 grows in a direction perpendicular to a tangent of the sheared edge 13a of the notch root in the notch portion 13, leading to fatigue fracture.

Accordingly, in order to improve the fatigue strength of the structure using the metal sheet, it is considered that it is necessary to improve the fatigue strength of the sheared edge of the metal sheet in which fatigue fracture is concerned. Therefore, the inventor has studied a method for improving the fatigue strength of the sheared edge of the metal sheet. As a result, it was considered that it is sufficient if the tensile residual stress at the sheared edge of the metal sheet is eliminated and changed to compressive residual stress, and a specific method thereof was further studied.

As a result of such studies, the inventor has conceived that a load is applied to the sheared edge 13a at the notch root of the metal sheet 11 where fatigue fracture as illustrated in FIG. 2 is concerned so that tensile plastic strain concentrates in a direction perpendicular to the direction in which the crack 15 grows (left direction in the drawing). Then, it has been found that when the load is unloaded after tensile plastic strain is locally generated on the sheared edge 13a at the notch root, compressive residual stress is applied to the sheared edge 13a at the notch root, and the fatigue strength is improved. The present invention has been made based on the above studies, and a specific configuration will be described below.

### <Metal sheet structure manufacturing method>

A metal sheet structure manufacturing method according to an embodiment of the present invention manufactures a structure using a metal sheet by improving fatigue strength of a portion of the structure where fatigue fracture is concerned. Then, as illustrated in FIG. 1, the metal sheet structure manufacturing method according to the present embodiment includes a fatigue fracture risk portion specifying step S1 and a compressive residual stress application step S3. The fatigue fracture risk portion specifying step S1 corresponds to a specifying step according to the present invention, and the compressive residual stress application step S3 corresponds to an application step according to the present invention. Hereinafter, as illustrated in FIG. 3 as an example, each of the above-described steps will be described with respect to a structure using the metal sheet 11 having a flat shape in which the notch portion 13 is formed at an end portion of the metal sheet by shearing.

### <<Fatigue fracture risk portion specifying step>>

The fatigue fracture risk portion specifying step S1 is a step of specifying the sheared edge 13a of the metal sheet 11 where stress concentrates during use of the structure and fatigue fracture is concerned as a fatigue fracture risk portion 17.

For example, as illustrated in FIG. 4, the fatigue fracture risk portion 17 can be specified by a fatigue strength specifying step S11, a stress analysis step S13, and a fatigue fracture risk portion specifying step S15. The fatigue strength specifying step S11 corresponds to a first specifying step according to the present invention, and the fatigue fracture risk portion specifying step S15 corresponds to a second specifying step according to the present invention.

### (Fatigue strength specifying step)

The fatigue strength specifying step S11 is a step of specifying the fatigue strength of the metal sheet 11. In the fatigue strength specifying step S11, for example, the fatigue strength can be specified by performing a fatigue test of a test piece prepared by shearing a metal sheet.

A fatigue test method using the test piece for specifying the fatigue strength is not particularly limited. For example, a method defined in JIS Z 2275 (fatigue test for a member subjected to a bending load during use using a test piece provided with a sheared edge) can be applied.

In addition, when the required fatigue life of the structure is known in advance, the time intensity in the fatigue life required for the structure may be specified as the fatigue strength of the metal sheet without performing the fatigue test using the test piece as described above.

### (Stress analysis step)

The stress analysis step S13 is a step of performing stress analysis for calculating the stress of a sheared edge 19 of the metal sheet 11 during use of the structure.

In the stress analysis step S13, a finite element model of the structure is created, and stress analysis using the finite element method is performed on input conditions (for example, a loading condition input to the structure) simulating the use environment of the structure. Then, by the stress analysis, the stress for each element or node corresponding to the sheared edge 19 of the metal sheet 11 in the finite element model of the structure can be calculated. As an analysis method of stress analysis, for example, elastic analysis or elastic-plastic analysis using a static implicit method can be applied.

### (Fatigue fracture risk portion specifying step)

In the fatigue fracture risk portion specifying step S15, a portion exceeding the fatigue strength specified in the fatigue strength specifying step S11 within the sheared edge 19 of the metal sheet 11 for which the stress has been calculated in the stress analysis step S13 is specified as the fatigue fracture risk portion 17 for which fatigue fracture is concerned. In the present embodiment, within the sheared edge 19 of the metal sheet 11 for which the stress has been calculated in the stress analysis step S13, the stress of the sheared edge 13a at the notch root of the notch portion 13 exceeds the fatigue strength specified in the fatigue strength specifying step S11. Therefore, in the fatigue fracture risk portion specifying step S15, the sheared edge 13a of the notch root in the notch portion 13 is specified as the fatigue fracture risk portion 17.

### <<Compressive residual stress application step>>

The compressive residual stress application step S3 is a step of applying a load to the structure such that tensile plastic strain concentrates on the fatigue fracture risk portion 17 specified in the fatigue fracture risk portion specifying step S1, and generating tensile plastic strain in the fatigue fracture risk portion 17. Further, the compressive residual stress application step S3 is a step of applying the compressive residual stress to the fatigue fracture risk portion 17 by generating tensile plastic strain in the fatigue fracture risk portion 17 and then unloading the load.

In the present embodiment, as illustrated in FIG. 3, a tensile load in a direction parallel to a tangent of the sheared edge 13a specified as the fatigue fracture risk portion 17 is applied to the metal sheet 11, so that tensile plastic strain is generated to concentrate on the fatigue fracture risk portion 17. The direction parallel to the tangent of the fatigue fracture risk portion 17 refers to a direction perpendicular to the direction (FIG. 2) in which the crack 15 grows from the sheared edge 13a of the notch root in the plane of the metal sheet 11. When tensile plastic strain is generated in the fatigue fracture risk portion 17 in this manner (FIG. 3(a)), compressive residual stress in a direction opposite to the tensile plastic strain is applied in a direction parallel to the tangent of the fatigue fracture risk portion 17 by unloading the tensile load (FIG. 3(b)).

### <Reason why fatigue strength can be improved>

A reason why it is possible to manufacture the structure using the metal sheet in which the fatigue strength of a portion of the structure where fatigue fracture is concerned is improved by the metal sheet structure manufacturing method according to the present embodiment will be described below.

As described above, the tensile residual stress is generated in the direction parallel to the tangent of the sheared edge 13a on the sheared edge 13a at the notch root of the notch portion 13 obtained by shearing the end portion of the metal sheet 11. Therefore, in the present embodiment, in the compressive residual stress application step S3, as illustrated in FIG. 3(a), a load is applied so that tensile plastic strain concentrates in the direction of the tangent of the fatigue fracture risk portion 17. As a result, tensile plastic strain is locally generated in the fatigue fracture risk portion 17. Then, when the load is unloaded after tensile plastic strain is generated in the direction of the tangent of the fatigue fracture risk portion 17, the periphery of the fatigue fracture risk portion 17 tends to return to the original shape. Therefore, the fatigue fracture risk portion 17 is pressed from the periphery, and is compressed in the direction opposite to the direction in which the tensile load is applied as illustrated in FIG. 3(b). As described above, the tensile residual stress in the direction of the tangent generated by the shearing of the notch portion 13 is eliminated and the compressive residual stress is applied in the direction of the tangent on the sheared edge 13a of the notch root of the notch portion 13 after the tensile plastic strain is generated and the load is unloaded. FIG. 5 illustrates an example in which the magnitudes of the tensile residual stress after the shearing generated on the sheared edge 13a of the notch root in the notch portion 13 and the compressive residual stress applied after generation of tensile plastic strain and unloading are measured by an X-ray residual stress measuring method by a cosα method.

As a result, even when stress concentrates on the sheared edge 13a of the metal sheet 11 specified as the fatigue fracture risk portion 17 during use of the structure, the growth of the crack can be suppressed, and the structure with improved fatigue strength can be manufactured.

In addition, by the metal sheet structure manufacturing method according to the present embodiment, since the compressive residual stress is generated in the fatigue fracture risk portion 17, the delayed fracture characteristics in the fatigue fracture risk portion 17 can also be improved.

Further, by the metal sheet structure manufacturing method according to the present embodiment, it is possible to cause work hardening by generating tensile plastic strain on the fatigue fracture risk portion 17 and to increase the yield strength of the fatigue fracture risk portion 17. As a result, it is also possible to improve the deformation strength of the fatigue fracture risk portion 17 in the metal sheet 11 when a single load is input to the structure.

In the above description, in the fatigue fracture risk portion specifying step S1, the fatigue strength specifying step S11 and the stress analysis step S13 are performed, and the sheared edge 13a of the metal sheet 11 where stress determined by stress analysis exceeds the fatigue strength is specified as the fatigue fracture risk portion 17.

However, in the present invention, when a portion where fatigue fracture is concerned in the structure of the metal sheet is known in advance, the fatigue fracture risk portion specifying step may specify the fatigue fracture risk portion without performing the specifying of the fatigue strength (S11) and the stress analysis (S13).

In addition, in the above description, in the compressive residual stress application step S3, a uniform tensile load is applied to the metal sheet 11 so that tensile deformation occurs in a direction parallel to the tangent of the fatigue fracture risk portion 17 in the plane of the flat metal sheet 11. This is because, since the notch portion 13 is a stress concentration portion in the first place, plastic strain can be concentrated on the sheared edge 13a of the notch root in the notch portion 13 specified as the fatigue fracture risk portion 17 only by applying a uniform load to the metal sheet 11.

However, in the compressive residual stress application step S3, it is sufficient if a load is applied so that tensile plastic strain concentrates on the fatigue fracture risk portion 17. For example, as illustrated in FIG. 6(a), a load that causes the fatigue fracture risk portion 17 to undergo bending deformation (in-plane bending deformation) to be the bending outside in the plane of the metal sheet 11 may be applied. Alternatively, as illustrated in FIG. 6(b), a load that causes the metal sheet 11 to undergo bending deformation in the out-of-plane direction (out-of-plane bending deformation, stretch flanging) along an edge of the notch portion 13 such that the sheared edge 13a that is the fatigue fracture risk portion 17 has a V shape may be applied. Furthermore, in the compressive residual stress application step, a load may be applied by combining the tensile deformation (FIG. 3(a)), the in-plane bending deformation (FIG. 6(a)), or the out-of-plane bending deformation (FIG. 6(b)).

In addition, in the compressive residual stress application step, as illustrated in FIG. 6(c), the tensile plastic strain may be generated in the fatigue fracture risk portion 17 by forming two beads 21 so as to sandwich the fatigue fracture risk portion 17 in the tangential direction of the sheared edge 13a.

In addition, the above description is directed to a case where the sheared edge 13a of the notch portion 13 formed at the end portion of the flat metal sheet 11 is a target, but the present invention does not limit the shape of the sheared edge in the metal sheet. Therefore, even when a sheared edge subjected to shearing in a substantially linear shape or a sheared edge of a hole portion subjected to blanking processing in a circular shape is specified as a fatigue fracture risk portion, it is sufficient if a load is applied to these sheared edges so as to concentrate tensile plastic strain.

For example, when there is a risk that fatigue fracture occurs on a sheared edge 33a of a hole portion 33 of a sheared flat metal sheet 31 as illustrated in FIG. 7, a load is applied so that tensile plastic strain concentrates on the sheared edge 33a of the hole portion 33 specified as a fatigue fracture risk portion 35. Then, after tensile plastic strain is generated in the fatigue fracture risk portion 35, the load is unloaded to apply compressive residual stress. As a result, in the structure using the flat metal sheet 31 in which the hole portion 33 is formed, it is possible to manufacture the structure by improving the fatigue strength of the sheared edge 33a of the hole portion 33 where fatigue fracture is concerned.

In order to apply a load so as to concentrate tensile plastic strain on the sheared edge 33a of the hole portion 33, bending deformation (out-of-plane bending deformation, burring) may be performed in the out-of-plane direction along the edge of the hole portion 33 as illustrated in FIG. 7(a). Alternatively, as illustrated in FIG. 7(b), the two beads 37 may be formed so as to sandwich the hole portion 33 in a direction parallel to the tangent of the sheared edge 33a.

In addition, although the hole portion 33 illustrated in FIG. 7 has a circular shape, the present invention is not limited thereto, and may be an elliptical hole portion.

In the present invention, in the compressive residual stress application step, it is favorable that the plastic strain be generated such that the absolute value of the compressive residual stress at the fatigue fracture risk portion after generation of the tensile plastic strain is 40% or more (for example, 392 MPa or more in the case of a steel sheet having a tensile strength of 980 MPa) of the tensile strength of the metal sheet. Since a tensile residual stress is present on the sheared edge subjected to the shearing, there is an effect of suppressing the growth of fatigue cracks only by yielding once and causing redistribution of stress. Then, when the compressive residual stress is 40% or more of the tensile strength as an absolute value, the effect of suppressing the growth of fatigue cracks in the sheared edge of the metal sheet can be sufficiently obtained. This point will be specifically described in examples described below.

In the present invention, the driving force of the compressive residual stress generated at the fatigue fracture risk portion by locally generating tensile plastic strain at the fatigue fracture risk portion and then unloading the load is a difference in tensile plastic strain between the fatigue fracture risk portion and the periphery thereof. Therefore, even when a local tensile plastic strain is generated in the fatigue fracture risk portion, when a difference in tensile plastic strain between the fatigue fracture risk portion and the periphery thereof is small, there is a possibility that a sufficient compressive residual stress cannot be applied to the fatigue fracture risk portion after unloading. Therefore, it is sufficient if the condition for generating tensile plastic strain at the fatigue fracture risk portion is a condition that a difference from the tensile plastic strain of the periphery can be obtained to the extent that sufficient compressive residual stress is applied.

In this regard, the relationship between the compressive residual stress and the average gradient of the tensile plastic strain at the fatigue fracture risk portion after generation of the tensile plastic strain and unloading will be described focusing on the average gradient of the tensile plastic strain in the direction orthogonal to the tangent of the fatigue fracture risk portion. The average gradient of the plastic strain was defined as an average gradient (mm⁻¹) obtained by dividing, by distance 2t (mm), a difference between the tensile plastic strain at the sheared edge and the tensile plastic strain at a position at the distance 2t (mm) from the sheared edge in a direction orthogonal to the tangent with respect to sheet thickness t (mm) of the metal sheet.

By FEM analysis with respect to a test piece model 71 (1/4 model) having a sheet thickness t = 3 mm provided with a semicircular notch portion 73 (blanking radius R) illustrated in FIG. 8-1, tensile deformation with a displacement amount of 0.18 to 2.0 mm was applied to the test piece model 71, and an average gradient of tensile plastic strain was obtained. Further, the residual stress in a fatigue fracture risk portion 75 (sheared edge 73a of notch root) after unloading was obtained.

FIG. 8-2 illustrates an example (blanking radius R = 10 mm) of (a) distribution of tensile plastic strain and (b) residual stress distribution in a direction (Y direction in FIG. 8-1) orthogonal to the tangent of the fatigue fracture risk portion 75. The horizontal axes indicate the distance from the notch root (sheared edge) in the direction orthogonal to the tangent. In the distribution of the plastic strain in the range from the notch root (distance = 0 mm) to the distance 2t (= 6 mm), the positive and negative of the inclination were reversed at a certain displacement amount (1.64 mm) or more, and the plastic strain became larger on the inner side than on the notch root (distance Y = 0 mm). This is because necking of the test piece due to tensile deformation varies depending on a stress state (notch root: plane stress state, inner part of test piece: plane strain stress state). In addition, the compressive residual stress had the largest value at the notch root (distance Y = 0 mm).

In addition, FIG. 8-3 illustrates (a) the relationship between the compressive residual stress at the notch root and the displacement amount of tensile deformation, and (b) the relationship between the average gradient of plastic strain and the displacement amount of tensile deformation. The compressive residual stress of the notch root increases with the displacement amount of the tensile deformation, but approaches a constant value when exceeding a predetermined displacement amount. On the other hand, as described above, regarding the average gradient of the plastic strain, the positive and negative are reversed when a predetermined displacement amount is exceeded. Note that the broken lines in FIG. 8-3(b) indicate the maximum values of the average gradient of the plastic strain in the step of tensile deformation.

FIG. 8-4 illustrates the relationship between the compressive residual stress at the notch root and the maximum value of the average gradient of plastic strain in the step of tensile deformation. As illustrated in FIG. 8-4, a strong correlation is recognized therebetween. This indicates that the compressive residual stress generated in the fatigue fracture risk portion 75 can be adjusted using the average gradient of the tensile plastic strain in the range from the fatigue fracture risk portion to 2t (mm) in the direction (Y direction in FIG. 8-1) orthogonal to the tangent of the notch root (fatigue fracture risk portion) as an index.

As described above, as a specific condition for generating tensile plastic strain, it is favorable that the average gradient of tensile plastic strain in the range from the fatigue fracture risk portion to 2t (mm) in the direction orthogonal to the tangent of the fatigue fracture risk portion with respect to the sheet thickness t (mm) of the metal sheet be 0.004/2t (mm⁻¹) or more. The average gradient of the plastic strain refers to a maximum value during deformation among average gradients given by the plastic strain at the fatigue fracture risk portion and the tensile plastic strain at the position of the distance 2t from the fatigue fracture risk portion. For example, in the case of a steel sheet having a sheet thickness t = 3 mm and a tensile strength of 980 MPa, in order to generate a compressive residual stress in which the absolute value of the compressive residual stress at the fatigue fracture risk portion is 40% (= 392 MPa) or more of the tensile strength, it is sufficient if the average gradient of tensile plastic strain is set to 0.004/2t = 6.7 × 10⁻⁴ (mm-¹) or more. By generating tensile plastic strain in this manner, it is possible to apply sufficient compressive residual stress by a difference in plastic strain between the fatigue fracture risk portion and the periphery thereof.

Further, in the compressive residual stress application step, it is preferable to generate tensile plastic strain such that a thickness reduction ratio at the fatigue fracture risk portion after generation of the tensile plastic strain and unloading is 10% or less. This is because when the thickness reduction ratio due to generation of tensile plastic strain exceeds 10% and necking occurs, a crack is likely to occur from a portion where the necking occurs, and the fatigue strength of the sheared edge may be conversely reduced.

In the present invention, the type of metal sheet as a material of the structure is not particularly limited, but it can be preferably applied to a structure using a metal sheet having high strength. This is because the tensile residual stress introduced into the metal sheet by the shearing is larger for a metal sheet having higher strength, and the effect of the application of the present invention for eliminating the tensile residual stress generated on the sheared edge of the metal sheet after the shearing is increased. Therefore, in the present invention, the metal sheet preferably has a tensile strength of 780 MPa class or more.

Further, in a metal sheet having a small strain hardening exponent, when a load is applied to the structure using the metal sheet and local plastic deformation starts at the fatigue fracture risk portion, the fatigue fracture risk portion is cured (hardened) and does not induce surrounding plastic deformation, plastic strain is concentrated, and fatigue fracture is likely to occur. Therefore, the metal sheet of the structure to which the present invention is applied preferably has a strain hardening exponent of 0.2 or less in a plastic strain range of 4% or more and 6% or less.

In the present embodiment, as illustrated in FIG. 6, the compressive residual stress application step S3 is performed on the sheared edge 13a of the metal sheet 11 having the fatigue fracture risk portion 17 specified in the fatigue fracture risk portion specifying step S1 before assembling the structure.

However, from the viewpoint of manufacturing cost for applying the compressive residual stress to the sheared edge of the metal sheet, it is favorable that the compressive residual stress be applied to the fatigue fracture risk portion in the step of press forming the metal sheet into the shape of the component constituting the structure among the plurality of steps of manufacturing the structure.

However, some of the plurality of steps of manufacturing the structure of the metal sheet include a process (for example, bending of the metal sheet, and the like) of generating tensile plastic strain on the sheared edge of the metal sheet specified as the fatigue fracture risk portion. When such a process is performed after the compressive residual stress application step according to the present invention, a stress state different from the compressive residual stress applied to the fatigue fracture risk portion is obtained, and there is a possibility that the fatigue strength of the fatigue fracture risk portion cannot be improved.

Therefore, the compressive residual stress application step is preferably performed after a process in which tensile plastic strain is generated at the fatigue fracture risk portion of the metal sheet among the plurality of steps of manufacturing the structure.

Further, in the present invention, the compressive residual stress application step may apply a load to the structure such that tensile plastic strain concentrates on the fatigue fracture risk portion of the metal sheet after the structure is assembled using the metal sheet.

### [First Example]

Experiments for confirming the operation and effect of the present invention has been performed, and this will be described below.

In a first example, a fatigue test was performed on a test piece 41 having a shape illustrated in FIG. 9 as a test object, and the fatigue strength was evaluated. The test piece 41 was obtained as a test material by processing a hot rolled steel sheet having a tensile strength of 1000 MPa class, a sheet thickness t = 3 mm, and a strain hardening exponent of 0.1 in a plastic strain range of 4% to 6% into a rectangular shape of 120 mm × 30 mm. Then, a semicircular notch portion 43 having a blanking radius R = 10, 20, or 30 mm was sheared at both ends of a central portion of the test piece 41 to prepare three types of test pieces having different blanking radii R. Here, the clearance at the time of shearing was set to 10%.

Next, in order to specify the fatigue strength of the hot rolled steel sheet as a test material, a fatigue test was performed. In the fatigue test, a cyclic load was applied to the test pieces 41 by complete reverse (alternating), and a repetition frequency was set to 20 Hz. Then, time intensity at the number of repetitions of load application of 300,000 times was determined as fatigue strength, and the result was 300 MPa.

Subsequently, a sheared edge 43a of the notch portion 43 of the test piece 41 was defined as a fatigue fracture risk portion 45, and compressive residual stress was applied. Since stress concentrates on the notch portion 43 of the test piece 41 and fatigue fracture occurs, the sheared edge 43a of the notch portion 43 was specified as the fatigue fracture risk portion 45 without performing the stress analysis step S13 and the fatigue fracture risk portion specifying step S15 described in the embodiment.

In the first example, as illustrated in FIG. 9, by applying various displacements indicated in Table 1 to both ends of the test piece 41 in a longitudinal direction, a load was applied so that tensile plastic strain was concentrated on the sheared edge 43a of the notch portion 43 specified as the fatigue fracture risk portion 45. Then, the compressive residual stress was applied to the fatigue fracture risk portion 45 by generating tensile plastic strain in the fatigue fracture risk portion 45 and then unloading the load (first to tenth inventive examples).

For example, in the third inventive example, the equivalent plastic strain gradient in a region from the sheared edge 43a of the notch root of the notch portion 43 to the distance 2t (= 6 mm) was 0.00303 mm⁻¹ (0.0188/2t), and the residual stress generated in the sheared edge 43a was -653 MPa.

In addition, in the first example, as a comparative object, the test piece 41 in which tensile plastic strain was not generated on the sheared edge 43a of the notch portion 43 of the test piece 41 so that the notch portion 43 remains was used as a comparative example (first, second, and fourth comparative examples). Further, the test pieces 41 under the condition that a load was applied so that tensile plastic strain was concentrated on the sheared edge 43a of the notch root of the notch portion 43 and no compressive residual stress was applied after unloading were designated as third and fifth comparative examples.

Then, a fatigue test was performed on each of the test pieces 41 of the first to tenth inventive examples and the first to fifth comparative examples. The fatigue test was performed by in-plane bending in an out-of-plane bending mode, and a cyclic load was applied to the test pieces 41 by complete reverse (alternating). The cyclic load was applied at a repetition frequency of 2 Hz, and the stress amplitude at the end portion of the test piece 41 was 400 MPa. Then, in the fatigue test, when the number of repetitions of the load application reached 500,000 times without occurrence of breakage in the test piece 41, it was determined as pass, and the test was terminated at 1 million times. Table 1 indicates fatigue test results.

### [Table 1]

**Table 1**

| | Blanking radius R | Displacement | Average gradient of plastic strain | Average gradient of plastic strain | Residual stress | Compressive residual stress/tensile strength | Thickness reduction ratio | Number of repetitions of load application to breakage | Breakage determination |
|---|---|---|---|---|---|---|---|---|---|
| | (mm) | (mm) | (mm⁻¹) | | (MPa) | | (%) | | |
| First inventive example | 10 | 0.18 | 0.0000246 | 0.000154/2t | -22 | 0.02 | 0.06 | 500,000 times | Pass |
| Second inventive example | 10 | 0.36 | 0.00123 | 0.00765/2t | -507 | 0.51 | 0.2 | 1 million times or more (no breakage) | Pass |
| Third inventive example | 10 | 0.55 | 0.00303 | 0.0188/2t | -653 | 0.65 | 0.57 | 1 million times or more (no breakage) | Pass |
| Fourth inventive example | 10 | 1.45 | 0.00303 | 0.0188/2t | -813 | 0.81 | 13.4 | 800,000 times | Pass |
| Fifth inventive example | 20 | 0.36 | 0.000543 | 0.00393/2t | -293 | 0.29 | 0.39 | 800,000 times | Pass |
| Sixth inventive example | 20 | 0.55 | 0.00076 | 0.00473/2t | -407 | 0.41 | 0.93 | 1 million times or more (no breakage) | Pass |
| Seventh inventive example | 20 | 1.45 | 0.00076 | 0.00473/2t | -484 | 0.48 | 13.1 | 800,000 times | Pass |
| Eighth inventive example | 30 | 0.36 | 0.000322 | 0.00217/2t | -214 | 0.21 | 0.23 | 600,000 times | Pass |
| Ninth inventive example | 30 | 0.55 | 0.000322 | 0.00217/2t | -296 | 0.3 | 0.98 | 700,000 times | Pass |
| Tenth inventive example | 30 | 1.45 | 0.000322 | 0.00217/2t | -367 | 0.37 | 10.8 | 600,000 times | Pass |
| First comparative example | 10 | 0 | - | - | 500 | -0.5 | 0 | 300,000 times | Fail |
| Second comparative example | 20 | 0 | - | - | 500 | -0.5 | 0 | 250,000 times | Fail |
| Third comparative example | 20 | 0.18 | - | - | 500 | -0.5 | 0 | 250,000 times | Fail |
| Fourth comparative example | 30 | 0 | - | - | 500 | -0.5 | 0 | 200,000 times | Fail |
| Fifth comparative example | 30 | 0.18 | - | - | 500 | -0.5 | 0 | 200,000 times | Fail |

As indicated in Table 1, in any of the first to ninth inventive examples, since the number of repetitions until breakage reached 500,000 times or more, they were determined as pass. In particular, in the second to third and sixth inventive examples, the test pieces were not broken even at the number of repetitions of 1 million times, and good results were obtained. In the second to third and sixth inventive examples, the average gradient of tensile plastic strain was 0.00076 mm⁻¹ or more (0.0047/2t mm⁻¹) or more, the absolute value of compressive residual stress was 407 MPa or more, and the ratio of the absolute value of compressive residual stress to tensile strength of the metal sheet was 0.4 or more (40% or more). On the other hand, in all of the first to fifth comparative examples, the sheared edge 43a of the notch portion 43 was broken when the number of repetitions was less than 500,000 times, and they were determined as fail.

Comparing the third and fourth inventive examples in which the blanking radius R = 10 mm, in the fourth inventive example in which the absolute value of the compressive residual stress was large, necking occurred, the thickness reduction ratio exceeded 10%, and breakage occurred at the number of repetitions of 800,000 times. On the other hand, in the third inventive example, necking did not occur and the thickness reduction ratio was 10% or less, and the test piece was not broken even at the number of repetitions of 1 million times, which was a better result than the fourth inventive example. Similarly, when the sixth and seventh inventive examples in which the blanking radius R = 20 mm and the ninth and tenth inventive examples in which the blanking radius R = 30 mm were compared with each other, the sixth and ninth inventive examples in which the thickness reduction ratio was 10% or less did not break even at the number of repetitions of 1 million times, and had better results.

As described above, the first example is intended for the metal sheet before the structure is manufactured, but a simple structure in a state close to the metal sheet is also assumed. Therefore, also in such a structure, it was suggested from the results of the first example that the structure of the metal sheet can be manufactured by improving the fatigue strength.

### [Second Example]

In a second example, a fatigue test was performed on a structure 51 illustrated in FIG. 10 as a test object, and the fatigue strength was evaluated.

The structure 51 is assembled into a square pipe shape using two metal sheets 53 and 55 formed into parts having a U-shaped cross section. For the metal sheet 53 and the metal sheet 55, a hot rolled steel sheet having a tensile strength of 780 MPa class, a sheet thickness t of 3 mm, and a strain hardening exponent of 0.1 in a plastic strain range of 4% to 6% was used as a test material.

One metal sheet 53 was formed into a U-shaped cross sectional part with a hole portion 53b having a diameter of 10 mm sheared in a steel sheet. The clearance at the time of shearing for forming the hole portion 53b was set to 10%. In the structure 51 using the metal sheet 53 in which the hole portion 53b was formed, it is considered that stress concentrated on a sheared edge 53b1 of the hole portion 53b during use, and thus, the sheared edge 53b1 was specified as a fatigue fracture risk portion. Therefore, after forming into a U-shaped cross section, as illustrated in FIG. 10, two beads 53c were formed on a top portion 53a so as to sandwich the hole portion 53b, tensile plastic strain was generated on the sheared edge 53b1 of the hole portion 53b, and compressive residual stress was applied by unloading.

With respect to the tensile plastic strain at the sheared edge 53b1 after forming the beads 53c, an average plastic strain gradient to a position 3t (= 9 mm) away from the sheared edge 53b1 of the hole portion 53b was 0.15 mm⁻¹. In addition, the residual stress of the sheared edge 53b1 cannot be measured by a normal X-ray residual stress measuring method due to the problem of angle. However, since the compressive residual stress on the surface of the metal sheet 53 in the vicinity of the sheared edge 53b1 specified as the fatigue fracture risk portion was -500 MPa, it is considered that a compressive residual stress of at least -100 MPa or less was applied to the fatigue fracture risk portion.

In the other metal sheet 55, a steel sheet was formed into a U-shaped cross sectional part in the same manner as the metal sheet 53. Then, the metal sheet 53 and the metal sheet 55 formed in a U-shaped cross section were joined in a square pipe shape by electric arc welding (arc welding) to assemble the structure 51 (second inventive example).

Then, the structure 51 according to the second inventive example was subjected to a fatigue test as illustrated in FIG. 11. The fatigue test was performed by three-point bending in which both end sides of the top portion 53a of the metal sheet 53 in which the hole portion 53b was formed were fixed and a load was applied to the center of the metal sheet 55, and the load was applied by pulsating at a repetition frequency of 1 Hz and a normal stress (nominal stress) at a sheet thickness surface was 300 MPa. In the fatigue test, when a crack was visually observed on the sheared edge 53b1 of the hole portion 53b of the metal sheet 53, the metal sheet 53 was determined to be broken, and when the number of repetitions reached 500,000 times without breakage of the sheared edge 53b1, the metal sheet 53 was determined as pass.

In addition, in the second example, as illustrated in FIG. 12, a structure 61 assembled into a square pipe shape by electric arc welding (arc welding) on the metal sheet 55 with a metal sheet 63 without beads having a hole portion 63b formed in a top portion 63a was set as the second comparative example. The structure 61 according to the second comparative example was also subjected to a fatigue test under the same conditions as those of the structure 51 according to the second inventive example (see FIG. 11) to determine the presence or absence of breakage in a sheared edge 63b1 of the hole portion 63b. Table 2 indicates fatigue test results.

### [Table 2]

**Table 2**

| Structure | Number of repetitions of load application to breakage | Pass/Fail |
|---|---|---|
| Second inventive example | 500,000 times or more (no breakage) | Pass |
| Second comparative example | 300,000 times | Fail |

As indicated in Table 2, in the structure 51 according to the second inventive example, no breakage occurred in the sheared edge 53b1 of the hole portion 53b even at the number of repetitions of 500,000 times, and it was determined as pass. On the other hand, in the structure 61 according to the second comparative example, breakage occurred in the sheared edge 53b1 of the hole portion 63b even at the number of repetitions of 300,000 times, and it was determined as fail.

As described above, from the results of the second example, it has been indicated that according to the present invention, a structure using a metal sheet can be manufactured by improving fatigue strength of a portion of the structure where fatigue fracture is concerned.

### Industrial Applicability

According to the present invention, it is possible to provide a metal sheet structure manufacturing method capable of reliably improving the fatigue strength of the sheared edge of the metal sheet without requiring a large device cost.

### Reference Signs List

- 1: STRUCTURE

- 11: METAL SHEET
- 13: NOTCH PORTION
- 13a: SHEARED EDGE
- 15: CRACK
- 17: FATIGUE FRACTURE RISK PORTION
- 19: SHEARED EDGE
- 21: BEAD
- 31: METAL SHEET
- 33: HOLE PORTION
- 33a: SHEARED EDGE
- 35: FATIGUE FRACTURE RISK PORTION
- 37: BEAD
- 41: TEST PIECE
- 43: NOTCH PORTION
- 43a: SHEARED EDGE
- 45: FATIGUE FRACTURE RISK PORTION
- 51: STRUCTURE
- 53: METAL SHEET
- 53a: TOP PORTION
- 53b: HOLE PORTION
- 53b1: SHEARED EDGE
- 53c: BEAD
- 55: METAL SHEET
- 57: FATIGUE FRACTURE RISK PORTION
- 59: STRAIN CONCENTRATION INDUCING BEAD
- 61: STRUCTURE
- 63: METAL SHEET
- 63a: TOP PORTION
- 63b: HOLE PORTION
- 63b1: SHEARED EDGE
- 71: TEST PIECE MODEL
- 73: NOTCH PORTION
- 73a: SHEARED EDGE
- 75: FATIGUE FRACTURE RISK PORTION

## Claims

1. A metal sheet structure manufacturing method for manufacturing a structure using a metal sheet by improving fatigue strength of a portion of the structure where fatigue fracture is concerned, the method comprising:
a specifying step of specifying a portion of a sheared edge of the metal sheet where stress concentration occurs during use of the structure and fatigue fracture is concerned as a fatigue fracture risk portion; and
an application step of applying a load to the metal sheet or the structure such that tensile plastic strain is concentrated on the specified fatigue fracture risk portion, and applying a compressive residual stress to the fatigue fracture risk portion by generating tensile plastic strain in the fatigue fracture risk portion and then unloading the load.

2. The metal sheet structure manufacturing method according to claim 1, wherein the specifying step includes
a first specifying step of specifying a fatigue strength of the metal sheet,
a stress analysis step of performing stress analysis for calculating stress of the sheared edge of the metal sheet during use of the structure, and
a second specifying step of specifying a portion exceeding the fatigue strength specified in the first specifying step within the sheared edge of the metal sheet in the structure for which the stress has been calculated as a fatigue fracture risk portion where fatigue fracture is concerned.

3. The metal sheet structure manufacturing method according to claim 1 or 2, wherein in a case where a notch portion is provided at an end portion of the metal sheet in a flat portion of the structure, and the fatigue fracture risk portion specified in the specifying step is a sheared edge of the notch portion, the application step generates tensile plastic strain in the fatigue fracture risk portion by one of or a combination of applying a tensile load in a direction parallel to a tangent of the fatigue fracture risk portion in the notch portion, applying a load that causes the fatigue fracture risk portion to undergo bending deformation to be bending outside in a plane of the metal sheet, or applying a load that causes a portion including the fatigue fracture risk portion to undergo bending deformation in an out-of-plane direction along an edge of the notch portion.

4. The metal sheet structure manufacturing method according to claim 1 or 2, wherein in a case where a hole portion having a circular shape or an elliptical shape is provided in the metal sheet in a flat portion of the structure, and the fatigue fracture risk portion specified in the specifying step is a sheared edge of the hole portion, the application step generates the tensile plastic strain in the fatigue fracture risk portion by one of or a combination of applying a tensile load in a direction parallel to a tangent of the fatigue fracture risk portion in the hole portion or applying a load that causes a portion including the fatigue fracture risk portion to undergo bending deformation in an out-of-plane direction along an edge of the hole portion.

5. The metal sheet structure manufacturing method according to claim 1 or 2, wherein the application step generates the tensile plastic strain in the fatigue fracture risk portion by forming a plurality of beads so as to sandwich the fatigue fracture risk portion in a direction parallel to a tangent of the fatigue fracture risk portion.

6. The metal sheet structure manufacturing method according to claim 1 or 2, wherein the application step generates the tensile plastic strain in the fatigue fracture risk portion such that an average gradient of the tensile plastic strain in a range from the fatigue fracture risk portion to 2t (mm) in a direction orthogonal to the tangent of the fatigue fracture risk portion with respect to a sheet thickness t (mm) of the metal sheet is 0.004/2t (mm⁻¹) or more.

7. The metal sheet structure manufacturing method according to claim 1 or 2, wherein the application step generates the tensile plastic strain in the fatigue fracture risk portion such that an absolute value of a compressive residual stress applied to the fatigue fracture risk portion is 40% or more of a tensile strength of the metal sheet.

8. The metal sheet structure manufacturing method according to claim 1 or 2, wherein the application step generates the tensile plastic strain in the fatigue fracture risk portion such that a thickness reduction ratio of the fatigue fracture risk portion is 10% or less.

9. The metal sheet structure manufacturing method according to claim 1 or 2, wherein the metal sheet has a tensile strength of 780 MPa or more.

10. The metal sheet structure manufacturing method according to claim 9, wherein the metal sheet has a strain hardening exponent of 0.2 or less in a plastic strain range of 4% or more and 6% or less.
